# EUROPÄISCHE PATENTANMELDUNG

(11) **EP 2 826 373 A1**
(43) Veröffentlichungstag der Anmeldung: **21.01.2015**
(21) Anmeldenummer: 13176561.2
(22) Anmeldetag: 15.07.2013
(51) Int. Cl.: A21B 3/13, A21B 3/15

(54) **Backunterlage**

(71) Anmelder: Möller Vertrieb von Bäckereisystemen, 50181 Bedburg/Erft (DE)
(72) Erfinder: Möller, Sibel, 50181 Bedburg/Erft (DE)
(74) Vertreter: Stenger, Watzke & Ring

(57) **Zusammenfassung**

Die Erfindung betrifft eine Backunterlage (1) zur Anordnung von Backerzeugnissen, insbesondere Brot, Brötchen und/oder dergleichen in einem Ofen, mit einem Backblech (3) aus einem feueraluminierten Stahlblech und einer das Backblech (3) aufnehmenden Trageinrichtung (4) aus einem vorzugsweise keramischen Werkstoff, der eine geringere Wärmeleitfähigkeit als das Stahlblech des Backblechs (3) aufweist, wobei das Backblech (3) auf seiner der Trageinrichtung (4) abgewandten Oberseite (5) eine Aufnahme (6) für ein Backerzeugnis (2) bereitstellt. Um eine neuartige Backunterlage (1) vorzuschlagen, die einen im Vergleich zu herkömmlichen Backblechen (3) energieeffizienteren Einsatz gestattet, dies aber bei gleichzeitiger Tauglichkeit für den insbesondere großindustriellen Einsatzfall, wird mit der Erfindung vorgeschlagen, dass das Backblech (3) und die Trageinrichtung (4) zu einem einstückigen Verbundkörper miteinander verbunden sind.

## Beschreibung

Die Erfindung betrifft eine Backunterlage zur Anordnung von Backerzeugnissen, insbesondere Brot, Brötchen, Kuchen, Kekse und/oder dergleichen in einem Ofen, mit einem Backblech aus einem feueraluminierten Stahlblech und einer das Backblech aufnehmenden Trageinrichtung aus einem vorzugsweise keramischen Werkstoff, der eine geringere Wärmeleitfähigkeit als das Stahlblech des Backblechs aufweist, wobei das Backblech auf seiner der Trageinrichtung abgewandten Oberseite eine Aufnahme für ein Backerzeugnis bereitstellt.

Eine Backunterlage der eingangs genannten, d. h. gattungsgemäßen Art ist aus der WO 20131/037682 A1 bekannt.

Als Backunterlagen finden typischerweise Backbleche Verwendung. Diese bestehen üblicherweise aus einem Stahl- oder Aluminiumwerkstoff. Um eine hinreichende Stabilität, insbesondere Biegesteifigkeit gewährleisten zu können, beträgt die Blechdicke vorbekannter Bleche zwischen ca. 0,6 mm und 2,0 mm.

Um ein Anbacken von Backerzeugnissen am Backblech zu verhindern, ist der Einsatz von Backpapier bekannt. Dieses dient als Zwischenlage zwischen dem Backblech einerseits und den Backerzeugnissen andererseits. Alternativ zur Verwendung von Backpapier ist es aus dem Stand der Technik bekannt geworden, die Backbleche auf ihrer mit den Backerzeugnissen in Kontakt kommenden Oberfläche mit einer Kunststoffschicht auszurüsten, insbesondere mit einer PTFE-Beschichtung, die antihaftend wirkt und so einem etwaigen Anhaften von Backerzeugnissen entgegenwirkt.

Eine solche Antihaft-Beschichtung nutzt sich im alltäglichen Einsatz mit der Zeit ab und muss deshalb in regelmäßigen Abständen zur Wahrung der bestimmungsgemäßen Funktion des Backbleches erneuert werden. Bei aus einem Stahlwerkstoff hergestellten Backblechen ist dies ohne weiteres möglich, und dies auch mehrmals. Aus einem Aluminiumwerkstoff hergestellte Backbleche erlauben eine solche Aufbereitung nicht, da die Ausbildung der Kunststoffbeschichtung unter Wärmeeintrag bei einer Temperatur von ca. 450° bis 500°C erfolgt, was bei aus einem Aluminiumwerkstoff hergestellten Backblechen zu einem Verziehen führt, womit ein verwendungstauglicher Einsatz nicht mehr gestattet ist. Aluminiumbackbleche erweisen sich insoweit als nachteilig gegenüber Stahlbackblechen.

Obgleich sich der Einsatz vorbeschriebener Backbleche im alltäglichen Praxiseinsatz bewährt hat, besteht Verbesserungsbedarf, insbesondere mit Blick auf die Herstellung von Backerzeugnissen wie z. B. Brot, Brötchen und/oder dergleichen im industriellen Maßstab.

Bei der Herstellung von Backerzeugnissen, insbesondere im industriellen Maßstab kommen Backöfen mit einer Beladekapazität zum Einsatz, die eine Mehrzahl von mit Backerzeugnissen beladenen Backblechen aufnehmen können. Es ist keine Seltenheit, dass derartige Backöfen 20, 30 und noch mehr beladene Backbleche aufnehmen können. Während eines Backvorgangs erfolgt eine Aufheizung all dieser Backbleche, was im Ergebnis bedeutet, dass die Backbleche zwecks Aufheizung dem Ofenraum Wärme entziehen. In der Konsequenz geht einerseits Wärme für den eigentlichen Backvorgang der Backerzeugnisse verloren und andererseits verlängert sich der Backprozess insgesamt. Es sind deshalb insbesondere industrieseitig Backbleche erwünscht, die einen energieeffizienten Backvorgang gestatten.

Um dem Wunsch eines energieeffizienteren Backbleches nachzukommen, ist mit der eingangs genannten WO 2013/037682 A1 eine Backunterlage, d. h. eine Aufnahmevorrichtung für Backerzeugnisse vorgeschlagen worden, die eine Tragstruktur aus einem vorzugsweise keramischen Material sowie davon getragene Einsätze aus Metall zur jeweiligen Aufnahme eines Backerzeugnisses aufweist. Dabei ist die Tragstruktur als plattenförmiges Formelement ausgebildet, das eine Vielzahl von Bohrungen aufweist, in die jeweils napfförmige Aufnahmen eingesetzt sind, die im bestimmungsgemäßen Verwendungsfall der Aufnahme jeweils eines Backerzeugnisses dienen. Diese napfförmigen Aufnahmen sind mit der Tragstruktur jeweils verklemmt oder verschraubt.

Die Besonderheit der aus der WO 2013/037682 A1 bekannten Konstruktion besteht darin, dass die Tragstruktur zumindest teilweise aus einem Werkstoff mit geringerer Wärmeleitfähigkeit als der Werkstoff der napfförmigen Aufnahmen gebildet ist. Der Vorteil dieser Konstruktion besteht insbesondere darin, dass im bestimmungsgemäßen Verwendungsfall eines Backvorgangs Dank der geringeren Wärmeleitfähigkeit des Werkstoffes der Tragstruktur weniger Energie von der Backunterlage im Vergleich zu herkömmlichen Backblechen aufgenommen wird. Damit erweist sich die aus der WO 2013/037682 vorbekannte Backunterlage im Unterschied zum Stand der Technik als sehr viel energieeffizienter.

Sinn und Zweck der vorbekannten Tragstruktur ist es, für die Stabilität, insbesondere die Biegesteifigkeit der Backunterlage Sorge zu tragen. Die aus Metall gebildeten, napfförmigen Aufnahmen übernehmen keinerlei tragende bzw. aussteifende Funktion und dienen ausschließlich dazu, das zu backende Gut aufzunehmen. Es ist somit gestattet, die napfförmigen Aufnahmen in vergleichsweise dünner Materialstärke auszubilden. Dies erbringt eine Optimierung der Backunterlage hinsichtlich Energieeffizienz.

Obgleich sich die aus der WO 2013/037682 vorbekannte Backunterlage bewährt hat, ist sie nicht frei von Nachteilen, insbesondere hinsichtlich ihres Handlings im bestimmungsgemäßen Anwendungsfall. So hat sich gezeigt, dass die Tragstruktur zur Erfüllung der für eine praxistaugliche Verwendung zu fordernden Stabilitätseigenschaften vergleichsweise dick auszuführen ist. Dies führt in nachteiliger Weise dazu, dass eine Bestückung herkömmlicher Industrieöfen nicht möglich ist, da diese zur Aufnahme von Backunterlagen Halterungen mit vordefiniertem und unveränderlichem Abstand aufweisen, was einer Aufnahme von Backunterlagen mit vergleichsweise dicker Tragstruktur entgegensteht. Aber auch bei der Verwendung von Öfen, die eine Aufnahme von Backunterlagen gemäß der WO 2013/037682 A1 gestatten, ergibt sich der Nachteil, dass bei unveränderlicher Ofenbauform die Ofenaufnahmekapazität sinkt, da aufgrund der vergleichsweise großen Dicke der Tragstrukturen nur noch eine verminderte Anzahl an Backunterlagen im Vergleich zu vorbekannten Backblechen aufgenommen werden kann. Die Gesamtenergiebilanz ist mithin nicht verbessert.

Von Nachteil bei der vorbekannten Konstruktion nach der WO 2013/037682 A1 ist des Weiteren, dass es auch im bestimmungsgemäßen Verwendungsfall zu ungewollten Beschädigungen kommt. Diese ergeben sich dadurch, dass Backunterlagen insbesondere im großindustriellen Einsatz wenig schonend behandelt werden. Es ist vielmehr so, dass zum Teil in Akkord gearbeitet wird, und Backunterlagen vergleichsweise unachtsam behandelt, insbesondere bis zur weiteren Verwendung aufeinandergestapelt werden. Diese auch im bestimmungsgemäßen Verwendungsfall unachtsame Behandlung führt bei aus der WO 2013/037682 A1 vorbekannten Konstruktion dazu, dass sich einzelne napfförmige Aufnahmen aus der Tragstruktur lösen können, insbesondere dann, wenn die einzelnen Backunterlagen beim Aufeinanderstapeln aneinanderschlagen. Es kann dann zu einem regelrechten Ausbrechen einzelner Napfaufnahmen kommen. Im Ergebnis ist deshalb die aus der WO 2013/037682 A1 vorbekannte Konstruktion wenig für den industriellen Großeinsatz geeignet.

Es ist ausgehend vom Vorbeschriebenen deshalb die **Aufgabe** der Erfindung, eine neuartige Backunterlage vorzuschlagen, die nach Vorbild der WO 2013/037682 einen im Vergleich zu herkömmlichen Backblechen energieeffizienteren Einsatz gestattet, dies aber bei gleichzeitiger Tauglichkeit für den insbesondere großindustriellen Einsatzfall.

Zur **Lösung** dieser Aufgabe wird mit der Erfindung eine Backunterlage der eingangs genannten Art vorgeschlagen, die sich dadurch auszeichnet, dass das Backblech und die Trageinrichtung zu einem einstückigen Verbundkörper miteinander verbunden sind.

Die Backunterlage nach der Erfindung ist als einstückiger Verbundkörper ausgebildet. Dies gewährleistet bei gleichzeitiger Stabilität eine vereinfachte Handhabung im bestimmungsgemäßen Verwendungsfall.

Die Backunterlage verfügt über eine Trageinrichtung einerseits sowie über ein Backblech andererseits. Diese sind zu einem quasi zweischichtigen Verbundmaterial miteinander verbunden, das im endfertigen Zustand die als einstückigen Verbundkörper vorliegende Backunterlage ausbildet. Es kommen also im Unterschied zum vorbekannten Stand der Technik nach der WO 2013/037682 A1 keine einzelnen von einer Tragstruktur aufgenommenen Metallnäpfe zum Einsatz, sondern es ist vielmehr ein zweischichtiges Verbundsystem vorgesehen. Dabei übernimmt in Abkehr zur bisherigen Konstruktion auch das im bestimmungsgemäßen Verwendungsfall mit den Backerzeugnissen in Kontakt tretende Backblech Trag- oder Stützfunktion, was in Kombination mit der zur Trageinrichtung ausgebildeten Verbindung zu einer zusätzlichen Stabilität und Versteifung führt. Im Ergebnis kann die Trageinrichtung der erfindungsgemäßen Backunterlage in ihren geometrischen Abmessungen, insbesondere in Dickenrichtung kleiner als die aus der WO 2013/037682 A1 vorbekannte Tragstruktur dimensioniert werden, und dies bei insgesamt gleicher Stabilität insbesondere Biegesteifigkeit der Backunterlage. Die erfindungsgemäße Backunterlage ist damit auch für den großindustriellen Einsatz in herkömmlichen Backöfen geeignet.

Hinzu kommt ein Weiteres: Mit dem zweischichtigen Verbundaufbau ist sichergestellt, dass die Wirkoberfläche der Backunterlage, d. h. die der im bestimmungsgemäßen Verwendungsfall der Aufnahme von Backerzeugnissen dienende Oberfläche vollflächig und ausschließlich durch das Backblech bereitgestellt ist. Es gibt im Unterschied zur vorbeschriebenen WO 2013/037682 A1 keine einzelnen voneinander separierte napfförmige Aufnahmen, weshalb mit der erfindungsgemäßen Backunterlage die Gefahr gebannt ist, dass es im bestimmungsgemäßen Verwendungsfall, beispielsweise beim Aufeinanderstapeln einzelner Backunterlagen zu einer Beschädigung oder sogar zu einem Ausreißen einzelner Backaufnahmen kommen kann. Das nach der erfindungsgemäßen Backunterlage vorgesehene durchgängige Backblech bedeckt die Trageinrichtung vollständig, womit eine Handhabung, einschließlich Aufbewahrung, Stapelung und Reinigung der erfindungsgemäßen Backunterlage in herkömmlicher Weise vorgenommen werden kann.

Dabei erweist sich die erfindungsgemäße Backunterlage aufgrund ihrer Materialausgestaltung im Sandwichaufbau als energieeffizienter als aus dem Stand der Technik vorbekannte Backbleche. Das nach der Erfindung vorgesehene Backblech ist im Unterschied zu herkömmlichen Backblechen vergleichsweise dünn ausgebildet, womit der Wärmeverlust im bestimmungsgemäßen Verwendungsfall minimiert ist. Aufgrund der vergleichsweise dünnen Ausgestaltung ist das Backblech als solches aber instabil, was durch die nach der Erfindung vorgesehene Trageinrichtung kompensiert wird. Dabei ergibt sich diese Stabilitätskompensation nicht nur durch die Trageinrichtung allein, sondern auch aufgrund der Verbindung von Backblech und Trageinrichtung zu dem als Backunterlage dienenden einstückigen Verbundkörper. Dabei ist die Dicke des Backblechs derart bemessen, dass einerseits die Wärmeaufnahmefähigkeit minimiert ist, andererseits aber auch noch eine gewisse Stabilität durch das Backblech sichergestellt ist, so dass die Trageinrichtung nicht allein die Gesamtstabilität der Backunterlage besorgen muss, was es im Ergebnis gestattet, eine ebenfalls vergleichsweise dünne Trageinrichtung auszubilden. In ihrer Kombination ermöglichen das Backblech und die Trageinrichtung einerseits Energieeffizienz und andererseits eine für den praktischen Einsatz im industriellen Maßstab erforderliche Handhabbarkeit.

Die Verbindung zwischen Backblech und Trageinrichtung ist bevorzugterweise stoffschlüssig bzw. quasi stoffschlüssig. Es wird so eine dauerhafte und innige Verbindung zwischen Backblech einerseits und Trageinrichtung andererseits gewährleistet. Zu diesem Zweck kann das Backblech mit der Trageinrichtung beispielsweise verklebt sein. Alternativ oder ergänzend kann eine thermische Verbindung von Backblech und Trageinrichtung vorgesehen sein, beispielsweise durch Verschweiß, Zusammenbacken und/oder dergleichen.

Die Backunterlage nach der Erfindung ist insgesamt dreischichtig, optional auch vierschichtig ausgebildet. Es sind als eine erste Schicht die Trageinrichtung und als eine zweite Schicht das Backblech vorgesehen. Dabei ist das Backblech seinerseits zweischichtig ausgebildet und verfügt als eine erste Schicht über einen Stahlgrundwerkstoff und als zweite Schicht über eine feueraluminierte Beschichtung, vorzugsweise eine feueraluminierte AlSi-Beschichtung. Dabei ist der Stahlwerkstoff in diesem Schichtsystem als mittlere Schicht ausgebildet, das heißt die untere Schicht wird durch die Trageinrichtung gebildet, gefolgt von der in Höhenrichtung darüberliegenden Schicht des Stahlgrundwerkstoffes, die auf ihrer der Trageinrichtung gegenüberliegenden Seite die feueraluminierte Beschichtung trägt, die dem Korrosionsschutz des Stahlgrundwerkstoffes dient. Es kann alternativ zum vorbeschriebenen Schichtsystem auch vorgesehen sein, die Schicht des Stahlgrundwerkstoffes beidseitig mit einer feueraluminierten Beschichtung auszurüsten. In diesem Fall sind zusammen mit der Trageinrichtung insgesamt vier Schichten vorgesehen, die nach der erfindungsgemäßen Ausgestaltung zu einem Verbundmaterial miteinander verbunden sind.

Das aus Trageinrichtung, Stahlgrundwerkstoff und Beschichtung gebildete Verbundmaterial wird durch Tiefziehen in vorzugsweise einem Arbeitsschritt zu einer Backunterlage nach der Erfindung ausgebildet. Die spätere Wirkoberfläche der Backunterlage kann optional nach Abschluss des Tiefziehvorgangs mit einer weiteren Beschichtung ausgebildet werden, beispielsweise mit einer Kunststoffbeschichtung. Eine solche Kunststoffbeschichtung dient als Antihaft-Beschichtung und kann beispielsweise eine Silikon-Beschichtung, eine Silikion-Harz-Beschichtung, eine PTFE-Beschichtung und/oder dergleichen sein.

Der entscheidende Vorteil der erfindungsgemäßen Backunterlage liegt darin, dass diese bei gleichzeitiger Formstabilität eine vergleichsweise geringe Wärmeaufnahmekapazität aufweist, jedenfalls geringer als bei herkömmlichen Backblechen. Damit entzieht die erfindungsgemäße Backunterlage einem Ofen während eines bestimmungsgemäßen Backvorgangs weniger Wärme, mithin weniger Energie, womit sie insgesamt energieeffizienter als herkömmliche Backbleche ist. Diese Energieeffizienz wird durch die erfindungsgemäße Verbundmaterialausgestaltung erreicht. Das aus einem Stahlwerkstoff bestehende Backblech ist für eine verringerte Wärmeaufnahmekapazität vergleichsweise dünn ausgebildet. In Kombination mit der nach der Erfindung vorgesehenen Trageinrichtung erhält die Backunterlage ihre Stabilität, wobei die Trageinrichtung aus einem Werkstoff gebildet ist, der im Unterschied zum Stahlwerkstoff des Backblechs eine sehr viel geringere Wärmeleitfähigkeit aufweist, infolge dessen sich die besondere Energieeffizienz der erfindungsgemäßen Backunterlage einstellt. Dabei wird als Werkstoff für die Trageinrichtung bevorzugterweise ein solcher Werkstoff gewählt, der eine Wärmeleitfähigkeit von unter 10 W/mK, vorzugsweise von unter 3 W/mK und noch mehr bevorzugt von unter 0,5 W/mK aufweist. Es kommt bevorzugterweise ein keramischer Werkstoff in Frage, beispielsweise ein Feuerleichtstein, der aus 40 % Al₂O₃, 54 % SiO₂, 1,2 % Fe₂O₃, 0,6 % CaO + MgO sowie 2,6 % Na₂O + K₂O besteht. Ein solcher Werkstoff kann beispielsweise in Pulverform durch Sprühen und/oder Tauchen auf das Backblech einseitig aufgebracht und durch Thermobonding stoffflüssig mit diesem verbunden werden. Es sind auch andere Arten der Verbindungsausgestaltung denkbar. Von erfindungswesentlicher Bedeutung ist indes, dass zum Zwecke der Reduzierung des Anteils an Stahlwerkstoff ein Austauschwerkstoff verwendet wird, der eine gegenüber einem Stahlwerkstoff sehr viel geringere Wärmeleitfähigkeit aufweist, wobei der Stahlwerkstoff und der Austauschwerkstoff zu einem quasi einstückigen Verbundmaterial ausgebildet sind, so dass in einem anschließenden Herstellschritt durch vorzugsweise Tiefziehen die erfindungsgemäße Backunterlage hergestellt werden kann.

In diesem Sinne kann die Trageinrichtung auch aus einem nicht-keramischen Werkstoff bestehen, beispielsweise einem metallischen Werkstoff. Ein Kunststoffwerkstoff ist ebenfalls denkbar. Von erfindungswesentlicher Bedeutung ist, dass die Trageinrichtung aus einem Werkstoff gebildet ist, der eine geringere Wärmeleitfähigkeit als der Stahlwerkstoff des Backblechs aufweist, wobei das Backblech und die Trageinrichtung zu einem Verbundmaterial miteinander kombiniert sind. Die Trageinrichtung kann zu diesem Zweck auch als Beschichtung des Backblechs ausgebildet sein. Es ist dabei angestrebt, bei gleichzeitig guter Umformbarkeit durch Tiefziehen eine Trageinrichtung aus einem Werkstoff bereitzustellen, der eine möglichst geringe Wärmeleitfähigkeit aufweist.

Gemäß einem alternativen Merkmal der Erfindung ist vorgesehen, dass das Backblech die Trageinrichtung randseitig umgreift. Es wird so eine mechanische Verbindung zwischen Backblech und Trageinrichtung ausgebildet, die alternativ oder in Ergänzung zur stoffschlüssigen bzw. quasi stoffschlüssigen Verbindung vorgesehen sein kann. Es ist gemäß dieser Variante vorgesehen, dass das Backblech die Trageinrichtung nach Art einer Haube aufnimmt, die Trageinrichtung also einseitig mit dem Backblech belegt und anderendseitig vom Backblech mit seinen Randkanten umgriffen ist. Es ist so eine formschlüssige Verbindung zwischen dem Backblech und der Trageinrichtung ausgebildet.

Gemäß einer Alternative kann vorgesehen sein, dass das Backblech mit seinen Randkanten in hierzu korrespondierende Aussparungen der Trageinrichtung eingreift. Gemäß dieser Alternative verfügt die Trageinrichtung backblechseitig über eine umlaufende Aussparung, beispielsweise in Form einer umlaufenden Nut. Das Backblech weist zur Trageinrichtung hin abgekantete Ränder auf, die im endmontierten Zustand in die von der Trageinrichtung bereitgestellte Aussparung eingreifen. Im Falle einer stoffschlüssigen bzw. quasi stoffschlüssigen Verbindung durch Kleben und/oder Schweißen kann eine solche Verbindung vollflächig zwischen Backblech und Trageinrichtung ausgebildet sein oder alternativ nur hinsichtlich der in die Aussparung der Trageinrichtung eingreifenden Randkanten des Backblechs vorgesehen sein.

Das Backblech ist zur Minimierung seiner Wärmeaufnahme im Betriebsfall möglichst dünn auszubilden. Gleichzeitig bedarf es einer gewissen Dicke des Backblechs, damit in Kombination mit der damit zu einem einstückigen Verbundkörper verbundenen Trageinrichtung die zu fordernde Gesamtstabilität erreicht ist. Je nach Backblech, d. h. je nach späterem Verwendungszweck hinsichtlich der damit zu verwendenden Backerzeugnisse können unterschiedliche Blechstärken, d. h. Dicken vorgesehen sein. Mit der Erfindung wird eine Gesamtdicke der aus Backblech und Trageinrichtung gebildeten Backunterlage von 0,1 mm bis 0,8 mm, vorzugsweise von 0,2 mm bis 0,5 mm noch mehr bevorzugt von 0,3 mm vorgeschlagen. Insbesondere eine Dicke im Bereich von 0,25 mm bis 0,35 mm, meist bevorzugt von 0,3 mm hat sich bewährt. Zum einen erlaubt diese Dicke die Ausgestaltung als Tiefziehteil, zum anderen ist gegenüber herkömmlichen Backblechen eine solche Reduzierung in der Dicke des Backblechs, d. h. der Stahlwerkstoffkomponente erreicht, dass eine signifikante Verbesserung in der Energieeffizienz erreicht ist. In der Kombination von Backblech und Trageinrichtung wird überdies die für den praxisgerechten Einsatz erforderliche Stabilität der Backunterlage sichergestellt.

Das Backblech trägt bevorzugterweise wirkseitig eine Kunststoffbeschichtung. Diese Kunststoffbeschichtung ist bevorzugterweise eine PTFE-, PFA-, Silikon- und/oder Silikonharz-Beschichtung. Dabei gestattet es die nach der Erfindung vorgesehene Ausgestaltung des Backblechs aus einem feueraluminierten Stahlblech, das eine wiederholte Neubeschichtung des Backblechs mit einer Kunststoffbeschichtung erfolgen kann. Die erfindungsgemäße Backunterlage kann mithin sowohl als Ersatz für herkömmliche Stahlbackbleche als auch für herkömmliche Aluminiumbackbleche dienen.

In der Ausgestaltung des Backblechs ist gemäß einer ersten Ausführungsform vorgesehen, dass die vom Backblech zur Aufnahme von Backerzeugnissen bereitgestellte Aufnahme plan ausgebildet ist. Dies gestattet die form- und größenunabhängige Aufnahme von beliebigen Backerzeugnissen, einschließlich Auftauerzeugnissen und/oder dergleichen.

Gemäß einer alternativen Ausgestaltung ist vorgesehen, dass die vom Backblech bereitgestellte Aufnahme eine Mehrzahl von vorzugsweise in Reihen und/oder Spalten angeordneten Backmulden zur Aufnahme jeweils eines Backerzeugnisses aufweist. Derartige Ausgestaltungen kommen insbesondere bei formgebundenen Backerzeugnissen zum Einsatz, wie z. B. Hamburger Brötchen, Hot-Dog Brötchen, Kuchen- und/oder Brotverbänden und/oder dergleichen.

Die Backunterlage ist bevorzugterweise tiefgezogen ausgebildet. Dies gewährleistet eine einfache und preisgünstige Herstellung. Es ist dabei vorgesehen, dass in einem ersten Schritt der Verbundwerkstoff aus Trageinrichtung und Backblech hergestellt wird. Dieser Verbundwerkstoff wird alsdann bevorzugterweise durch Tiefziehen zur erfindungsgemäßen Backunterlage ausgebildet. Es kann alsdann optional eine Beschichtung der Backunterlage auf ihrer Wirkoberfläche mit Kunststoff erfolgen, beispielsweise einer Beschichtung aus PTFE. Der durch Tiefziehen zur erfindungsgemäßen Backunterlage umzuformende Verbundwerkstoff ist erfindungsgemäß quasi einstückig ausgebildet, verfügt aber mehrere Schichten. Es sind als eine erste Schicht eine Trageinrichtung und als eine zweite Schicht ein Backblech vorgesehen. Das Backblech ist seinerseits ebenfalls schichtartig ausgebildet und verfügt über eine erste Schicht aus einem Stahlgrundwerkstoff sowie über eine darauf aufgebrachte zweite Schicht, vorzugsweise eine feueraluminierte AlSi-Beschichtung, die dem Stahlgrundwerkstoff als Korrosionsschutz dient. Die Trageinrichtung besteht indes aus einem Werkstoff, der eine niedrigere Wärmeleitfähigkeit als das Backblech, insbesondere der Stahlgrundwerkstoff aufweist. Als Werkstoff für die Trageinrichtung kommen metallische Werkstoffe sowie Kunststoffe in Betracht. Bevorzugt ist indes die Verwendung eines keramischen Werkstoffes, der eine vergleichsweise geringe Wärmeleitfähigkeit aufweist.

Im Falle der Ausgestaltung des Backblechs mit Backmulden ist gemäß einem alternativen Merkmal der Erfindung vorgesehen, dass die Trageinrichtung zu den Backmulden korrespondierende Aussparungen aufweist. Im bestimmungsgemäßen Verwendungsfall greifen die Backmulden des Backblechs in diese von der Trageinrichtung bereitgestellten Aussparungen ein. Ein kompakter und vergleichsweise flacher Gesamtaufbau ist so sichergestellt.

Gemäß einem weiteren Merkmal der Erfindung ist vorgesehen, die Trageinrichtung mehrteilig auszubilden. Diese Ausgestaltung dient insbesondere der Kompensation von wärmebedingten unterschiedlichen Ausdehnungen von Trageinrichtung einerseits und Backblech andererseits. So kann beispielsweise vorgesehen sein, die Trageinrichtung in Längs- und/oder Breitenrichtung unter Ausbildung einer Dehnungsfuge zweiteilig auszubilden. Aufgrund der nach der Erfindung vorgesehenen einstückigen Verbundkörperausgestaltung bedarf es keiner besonderen Verbindung der Teile der Trageinrichtung untereinander. Aufgrund des gemeinsamen Backbleches werden die einzelnen Teile der Trageinrichtung zusammengehalten und bilden in Kombination mit dem Backblech den erfindungsgemäßen, einstückigen Verbundkörper aus. Dabei hat die mehrteilige Ausgestaltung den Vorteil, dass wärmebedingte Ausdehnungen des Backblechs von der Trageinrichtung ebenfalls ausgeführt werden können, d. h. die Trageinrichtung einer wärmebedingten Ausdehnung des Backbleches nicht entgegensteht, so dass eine thermisch bedingte Beschädigung der Trageinrichtung durch beispielsweise Rissbildung vermieden ist. Aus Stabilitätsgründen kann alternativ vorgesehen sein, die zwischen zwei Teilen einer Trageinrichtung vorgesehene Dehnungsfuge mit einem Dehnmaterial auszufüllen.

Gemäß einem weiteren Merkmal der Erfindung ist vorgesehen, dass die Backunterlage einen umlaufenden Absatz bereitstellt, beispielsweise durch eine umgebördelte umlaufende Randkante. Der Absatz dient dazu, eine robotergestützte Beschickung eines Ofens bzw. eine Entleerung desselben zu ermöglichen, indem nämlich eine Hintergreifung bzw. Untergreifung mittels entsprechend ausgebildeter Automaten- und/oder Roboterzangen und/oder dergleichen gestattet ist.

Die Backunterlage kann je nach späterer Verwendung in nahezu beliebiger Größe ausgebildet sein. Es kommen indes typischerweise Standardmaße zum Einsatz, so dass eine Verwendung mit herkömmlichen Öfen und Automaten- und/oder Robotern gestattet ist. Es wird deshalb vorgeschlagen, dass die Backunterlage eine Größenabmessung in der Breite von 400 mm bis 2400 mm und in der Länge von 400 mm bis 2400 mm aufweist. Auf diese Größenausgestaltung ist die erfindungsgemäße Backunterlage aber selbstverständlich nicht beschränkt. Es können auch kundenspezifische, hiervon abweichende Maße ausgebildet werden. Die konstruktive Ausgestaltung nach der Erfindung stellt für individuelle Größenvorgaben insofern keine Beschränkung dar.

Mit der Erfindung wird ferner vorgeschlagen die Verwendung eines feueraluminierten Stahlblechs als Backblech. Feueraluminierte Stahlbleche sind aus dem Stand der Technik an sich bekannt und finden vorzugsweise in der Automobilindustrie Verwendung. Der Einsatz eines solchen Stahlblechs in der Backindustrie ist bislang gänzlich unbekannt. Insbesondere die Verwendung eines solchen Blechs als Backblech ist bislang nicht bekannt. Wie Versuche der Anmelderin ergeben haben, eignet sich ein aluminiertes Stahlblech insbesondere deshalb als Backblech, weil es einen guten Wärmetransport gestattet, vergleichsweise verzugsfrei auch unter hohen Temperaturen ist, die für ein Backblech geforderte Stabilität auch bei einer vergleichsweise geringen Blechstärke erbringt und darüber hinaus dazu geeignet ist, auch wiederholt mit einer Kunststoffbeschichtung ausgerüstet zu werden. Damit biete aluminiertes Stahlblech bei der Verwendung als Backblech gegenüber herkömmlichen Stahlblechen wesentliche Vorteile, die in dieser Form nicht zu erwarten waren.

Mit der Erfindung wird insbesondere die Verwendung eines feueraluminierten Stahlblechs als Backblech vorgeschlagen, das mit einer Trageinrichtung aus einem vorzugsweise keramischen Werkstoff, der eine geringere Wärmeleitfähigkeit als der Stahlwerkstoff des Backblechs aufweist zu einem als Backunterlage dienenden einstückigen Verbundkörper verbunden ist. Die Vorteile einer solchen Backunterlage ergeben sich aus der vorstehenden Beschreibung.

Die erfindungsgemäße Backunterlage eignet sich nicht ausschließlich, aber insbesondere als:
- **Hamburgerbleche:** Die Bleche werden hergestellt mit tiefgezogenen Cups von 15 - 100 Stück pro Blech, die Maße liegen bei der Länge zwischen 10 mm - 2400 mm und Breite zwischen 10 mm - 2400 mm. Die Rahmenprofilverarbeitung der Bleche wird ebenfalls nach den Bedürfnissen des Kunden angepasst. Die Formen können mit einer Teflon-Beschichtung verwendet werden. Die Art der Beschichtung wird nach den Bedürfnissen des Kunden angepasst.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.
   Diese Bleche können in einem mit allen Cups tiefgezogen werden mit gebördeltem Rand und stapelbar und nicht stapelbar, geeignet für ein Robotersystem oder ein manuelles System.
   Oder die Cups können einzeltiefgezogen nach gewünschter Stückzahl nachher in ein Blech positioniert eingebracht werden, entweder gepunktet oder eingeschweißt.
   Es besteht auch die Möglichkeit ohne zusätzliches Werkzeug die einzelnen Formen in das Blech zu pressen.
- **Hot-Dog-Bleche:** Die Bleche werden hergestellt mit tiefgezogenen Cups von 15 -100 Stück pro Blech, die Maße liegen bei der Länge zwischen 10 mm - 2400 mm und Breite zwischen 10 mm - 2400 mm. Die Rahmenprofilverarbeitung der Bleche wird ebenfalls nach den Bedürfnissen des Kunden angepasst. Die Formen können mit einer Teflon-Beschichtung verwendet werden. Die Art der Beschichtung wird nach den Bedürfnissen des Kunden angepasst.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.
   Diese Bleche können in einem mit allen Cups tiefgezogen werden mit gebördeltem Rand und stapelbar und nicht stapelbar, geeignet für ein Robotersystem oder ein manuelles System.
   Oder die Cups können einzeltiefgezogen nach gewünschter Stückzahl nachher in ein Blech positioniert eingebracht werden, entweder gepunktet oder eingeschweißt.
   Es besteht auch die Möglichkeit ohne zusätzliches Werkzeug die einzelnen Formen in das Blech zu pressen.
- **Croissantbleche:** Die Bleche werden hergestellt mit tiefgezogenen Cups von 15 - 100 Stück pro Blech, die Maße liegen bei der Länge zwischen 10 mm - 2400 mm und Breite zwischen 10 mm - 2400 mm. Die Rahmenprofilverarbeitung der Bleche wird ebenfalls nach den Bedürfnissen des Kunden angepasst.
   Die Formen können mit einer Teflon-Beschichtung verwendet werden. Die Art der Beschichtung wird nach den Bedürfnissen des Kunden angepasst.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.
   Diese Bleche können in einem mit allen Cups tiefgezogen werden mit gebördeltem Rand und stapelbar und nicht stapelbar, geeignet für ein Robotersystem oder ein manuelles System.
   Oder die Cups können einzeltiefgezogen nach gewünschter Stückzahl nachher in ein Blech positioniert eingebracht werden, entweder gepunktet oder eingeschweißt.
   Es besteht auch die Möglichkeit ohne zusätzliches Werkzeug die einzelnen Formen in das Blech zu pressen.
- **Muffinbleche:** Die Bleche werden hergestellt mit tiefgezogenen Cups von 15 - 100 Stück pro Blech, die Maße liegen bei der Länge zwischen 10 mm - 2400 mm und Breite zwischen 10 mm - 2400 mm. Die Rahmenprofilverarbeitung der Bleche wird ebenfalls nach den Bedürfnissen des Kunden angepasst. Die Formen können mit einer Silikon-Harz-Beschichtung oder einer transparenten oder falls gewünscht mit einer Teflon-Beschichtung versehen werden. Diese Formen können jedoch auch ohne Beschichtung verwendet werden.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung. Diese Bleche können in einem mit allen Cups tiefgezogen werden mit gebördeltem Rand und stapelbar und nicht stapelbar, geeignet für ein Robotersystem oder ein manuelles System.
   Oder die Cups können einzeltiefgezogen nach gewünschter Stückzahl nachher in ein Blech positioniert eingebracht werden, entweder gepunktet oder eingeschweißt. Es besteht auch die Möglichkeit ohne zusätzliches Werkzeug die einzelnen Formen in das Blech zu pressen.
- **Kuchenbleche aller** Die Bleche werden hergestellt mit tiefgezogenen Formen von **Art und** 15 - 100 Stück Blech, die Maße liegen bei der Länge **Design für indus-** zwischen 10 mm - 2400 mm und Breite zwischen 10 mm **trielle Produktion** bis 2400 mm. Die Rahmenprofilverarbeitung der Bleche **oder normale** wird ebenfalls nach den Bedürfnissen des Kunden **Haushalte:** angepasst. Die Formen können mit einer Silikon-Harz-Beschichtung, oder einer transparenten oder falls gewünscht mit einer Teflon-Beschichtung beschichtet werden. Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.
   Diese Bleche können als Einzelformen tiefgezogen werden mit gebördeltem Rand und stapelbar und nicht stapelbar, geeignet für ein Robotersystem oder ein manuelles System. Oder die Cups können einzeltiefgezogen nach gewünschter Stückzahl nachher in ein Blech positioniert eingebracht werden, entweder gepunktet oder eingeschweißt.
   Es besteht auch die Möglichkeit ohne zusätzliches Werkzeug die einzelnen Formen in das Blech zu pressen.
- **Paninibleche:** Die Bleche werden hergestellt mit tiefgezogenen Cups von 15 - 100 Stück pro Blech, die Maße liegen bei der Länge zwischen 10 mm - 2400 mm und Breite zwischen 10 mm - 2400 mm.
   Die Formen können mit einer Teflon-Beschichtung verwendet werden. Die Art der Beschichtung wird nach den Bedürfnissen des Kunden angepasst.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.
   Diese Bleche können in einem mit allen Cups tiefgezogen werden mit gebördeltem Rand und stapelbar und nicht stapelbar, geeignet für ein Robotersystem oder ein manuelles System.
   Oder die Cups können einzeltiefgezogen nach gewünschter Stückzahl nachher in ein Blech positioniert eingebracht werden, entweder gepunktet oder eingeschweißt.
   Es besteht auch die Möglichkeit ohne zusätzliches Werkzeug die einzelnen Formen in das Blech zu pressen.
- **Brotformenverbände**: Eine Einzelform oder Verbandmaß, diese können von einem Brotverband mit zwei Einzelformen bis zu einem Brotverband mit ca. 50 Stück Einzelformen in einem Rahmen produziert und eingesetzt werden.
   Diese Formen können in Stikkenwagen aufbewahrt werden oder gestapelt werden mit Robotersystem für industrielle Brotlinien, diese können auch ungestapelt sein. Die Griffe der Verbände können ebenfalls nach Kundenwunsch eingebracht werden.
   Die Formen können mit einer Teflon-Beschichtung oder ohne Beschichtung verwendet werden. Die Art der Beschichtung wird nach den Bedürfnissen des Kunden angepasst.
   Die Formen können nach jeglicher Art auf Wunsch des Kunden hergestellt werden, dies bezieht sich auf die Maße, ob tiefgezogen oder nicht oder in geschweißter Form, mit Riffel oder ohne Riffel.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.
   Diese Bleche können als Einzelform tiefgezogen werden mit gebördeltem Rand und stapelbar und nicht stapelbar, geeignet für ein Robotersystem oder ein manuelles System. Oder aber die Formen können einzeltiefgezogen nach gewünschter Stückzahl nachher in ein Blech positioniert eingebracht werden, entweder gepunktet oder eingeschweißt.
   Es besteht auch die Möglichkeit ohne zusätzliches Werkzeug die einzelnen Formen in das Blech zu pressen.
- **Kuchenverbände**: Alle Arten von Kuchenverbänden für Süßgebäck können in Einzelformen oder in Verbänden hergestellt werden. Die Verbände können von 2 Einzelformen bis zu ca. 30 Einzelformen hergestellt werden. Diese sind wieder manuell oder für Robotersysteme oder industrielle Liniensysteme einsetzbar. Sie können stapelbar oder nicht stapelbar hergestellt werden. Die Griffe der Verbände können ebenfalls nach Kundenwunsch eingebracht werden. Die Formen können mit einer Silikon-Harz-Beschichtung oder einer transparenten oder falls gewünscht mit einer Teflon-Beschichtung versehen werden. Diese Formen können jedoch auch ohne Beschichtung verwendet werden.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.
   Diese Bleche können als Einzelform tiefgezogen werden mit gebördeltem Rand, stapelbar und nicht stapelbar, geeignet für ein Robotersystem oder ein manuelles System.
   Oder die Formen können einzeltiefgezogen nach gewünschter Stückzahl nachher in ein Blech positioniert eingebracht werden, entweder gepunktet oder eingeschweißt.
   Es besteht auch die Möglichkeit ohne zusätzliches Werkzeug die einzelnen Formen in das Blech zu pressen.
- **Pizzableche:** Die Maße liegen bei einem Durchmesser von ca. 100 mm - 800 mm.
   Die Formen können mit einer Teflon-Beschichtung oder ohne Beschichtung verwendet werden. Die Art der Beschichtung wird nach den Bedürfnissen des Kunden angepasst.
   Alle Formen können nach Kundenwunsch bezüglich der Maße entworfen und gefertigt bzw. angepasst werden. Die Maße können in jeglicher Art, Länge oder Breite oder Höhe etc. verändert werden.
   Auch das Design der Form kann an den Wunsch des Kunden angepasst werden, z.B. Herzform, Dreieckform, usw. Es gibt diesbezüglich keine Begrenzung.

Bei den beispielhaft voraufgeführten Backunterlagen kommt vorzugsweise ein aluminiertes Stahlblech mit einer Materialstärke von 0,3 bis 2 mm mit einer Al-Auflage AS 120 bis 150 zum Einsatz.

Das erfindungsgemäße Verbundmaterial eignet sich nicht nur zur Ausbildung vorgenannter Bleche. Es können aus diesem Material auch die Innenwände von Backöfen und/oder Beschichtungsöfen ausgebildet sein. Ferner eignet sich das Verbundmaterial zur Ausbildung von Crêpe- oder Waffeleisen in Crêpe- oder Waffelmaschinen. Es können auch die Toasteisen für Toastmaschinen aus derartigem Verbundmaterial hergestellt werden.

Weitere Vorteile und Merkmale der Erfindung ergeben sich aus der nachfolgenden Beschreibung anhand der Figuren. Dabei zeigen:
- Fig. 1:: in schematischer Perspektivdarstellung eine Backunterlagen nach der Erfindung;
- Fig. 2:: in einer Ausschnittsdarstellung ein die Backunterlage nach der Erfindung bildendes Verbundmaterial in einer ersten Ausführungsform;
- Fig. 3:: in einer Ausschnittsdarstellung ein die Backunterlage nach der Erfindung bildendes Verbundmaterial in einer zweiten Ausführungsform;
- Fig. 4:: in schematischer Darstellung eine Backunterlage nach der Erfindung gemäß einer ersten Ausführungsform;
- Fig. 5:: in unterschiedlichen Ansichten eine Backunterlage nach der Erfindung gemäß einer ersten Ausführungsform;
- Fig. 6:: in unterschiedlichen Ansichten eine Backunterlage nach der Erfindung gemäß einer zweiten Ausführungsform;
- Fig. 7:: in unterschiedlichen Ansichten eine Backunterlage nach der Erfindung gemäß einer dritten Ausführungsform;
- Fig. 8:: in unterschiedlichen Ansichten eine Backunterlage nach der Erfindung gemäß einer vierten Ausführungsform;
- Fig. 9:: in unterschiedlichen Ansichten eine Backunterlage nach der Erfindung gemäß einer fünften Ausführungsform;
- Fig. 10:: in unterschiedlichen Ansichten eine Backunterlage nach der Erfindung gemäß einer sechsten Ausführungsform;
- Fig. 11:: in unterschiedlichen Ansichten eine Backunterlage nach der Erfindung gemäß einer siebten Ausführungsform;
- Fig. 12:: in unterschiedlichen Ansichten eine Backunterlage nach der Erfindung gemäß einer achten Ausführungsform;
- Fig. 13:: in unterschiedlichen Ansichten eine Backunterlage nach der Erfindung gemäß einer neunten Ausführungsform;
- Fig. 14:: in unterschiedlichen Ansichten eine Backunterlage nach der Erfindung gemäß einer zehnten Ausführungsform;
- Fig. 15:: in schematischer Draufsicht eine Backunterlage nach der Erfindung gemäß einer Alternative;
- Fig. 16:: in einer Ausschnittsdarstellung die Backunterlage nach der Erfindung gemäß Schnittlinie II-II nach Fig. 1;
- Fig. 17:: in einer Ausschnittsdarstellung die Backunterlage gemäß Fig. 2 in einer ersten Ausführungsform;
- Fig. 18:: in einer Ausschnittsdarstellung die Backunterlage gemäß Fig. 2 in einer zweiten Ausführungsform;
- Fig. 19:: in einer Ausschnittsdarstellung die Backunterlage gemäß Fig. 2 in einer dritten Ausführungsform;

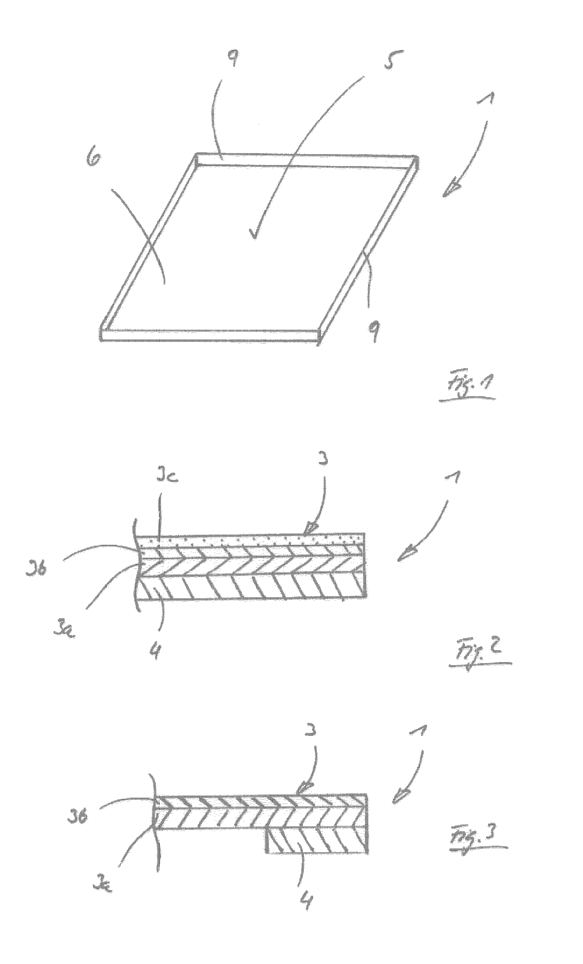

Fig. 1 lässt in lediglich schematisch-perspektivischer Darstellung eine Backunterlage 1 nach der Erfindung erkennen. Die Backunterlage 1 stellt eine von einem umlaufenden Rand 9 umgebende Oberseite 5 bereit, die als Aufnahme 6 zur Aufnahme von in Fig. 1 nicht näher dargestellten Backerzeugnisses 2 dient.

Die Backunterlage 1 besteht aus einer Trageinrichtung 4 und einem Backblech 3, das von der Trageinrichtung 4 aufgenommen ist. Dabei sind das Backblech 3 und die Trageinrichtung 4 zu einem einstückigen Verbundkörper miteinander verbunden. Die der Trageinrichtung 4 abgewandte Oberseite 5 des Backblechs 3 stellt die Aufnahme 6 für ein Backerzeugnis 2 bereit.

Die Fign. 2 und 3 lassen in zwei Ausführungsformen den Aufbau des sandwichartigen Verbundmaterials des Verbundkörpers erkennen. Die Trageinrichtung 4 und das Backblech 3 bilden jeweils eine Schicht aus. Dabei sind das Backblech 3 und die Trageinrichtung 4 vorzugsweise vollflächig miteinander verbunden, und zwar vorzugsweise stoffschlüssig bzw. quasi stoffschlüssig. Die Trageinrichtung 4 kann in diesem Sinne auch als Beschichtung des Backblechs 3 ausgebildet sein.

Das Backblech 3 besteht seinerseits aus Schichten, wobei im gezeigten Ausführungsbeispiel nach Fig. 2 drei Schichten und nach Fig. 3 zwei Schichten vorgesehen sind.

Gemäß der Ausführungsform nach Fig. 2 ist das Backblech aus einem Stahlwerkstoff gebildet, der eine erste Schicht 3a darstellt. Aus Korrosionsschutzgründen ist auf diese Schicht 3a eine Beschichtung aus einer feueraluminierten AlSi-Beschichtung 3b aufgebracht. In Höhenrichtung nach Fig. 2 ist zuoberst, das heißt abschließend eine Kunststoffschicht vorgesehen, im gezeigten Ausführungsbeispiel eine PTFE-Beschichtung 3c, die als Antihaftbeschichtung dient.

Das Ausführungsbeispiel nach Fig. 3b zeigt keine abschließende PTFE-Beschichtung 3c. Gemäß dieser Ausführungsform ist ein Backblech 3 vorgesehen, das lediglich aus einem Stahlwerkstoff 3a und einer darauf aufgebrachten AlSi-Beschichtung 3b gebildet ist. Ferner ist im Unterschied zur Ausgestaltung nach Fig. 2 eine Trageinrichtung 4 vorgesehen, die sich nur teilweise über die der Trageinrichtung 4 zugewandten Unterseite des Backblechs 3 erstreckt.

Gemäß einer weiteren und in den Figuren nicht gesondert dargestellten Ausführungsform kann auch vorgesehen sein, die Schicht des Stahlwerkstoffes 3a beidseitig mit einer AlSi-Beschichtung 3b auszurüsten.

Zur Ausbildung der in Fig. 1 schematisch dargestellten Backunterlage 1 wird zunächst das Verbundmaterial aus Backblech 3 und Trageinrichtung 4 ausgebildet. Das Verbundmaterial liegt vorzugsweise in Form von Tafeln oder als Coil vor. Zur Ausbildung der Backunterlage wird das Verbundmaterial umgeformt, vorzugsweise durch Tiefziehen. Dabei werden bevorzugterweise in einem Arbeitsschritt sowohl etwaige Backmulden, Rücksprünge, Vorsprünge und/oder dergleichen sowie ein unter Umständen vorgesehener Rand 9 ausgebildet. Die so fertiggestellte Backunterlage 1 kann alsdann in einem optionalen Schritt auf ihrer Wirkoberfläche 5 mit einer Antihaft-Beschichtung aus Kunststoff, beispielsweise Teflon ausgerüstet werden. Im Ergebnis ergibt sich so eine Backunterlage 1, wie sie je nach Ausführungsform für unterschiedliche Anwendungen genutzt werden kann, wie sich dies beispielhaft aus den weiteren Figuren ergibt.

Der besondere Vorteil der erfindungsgemäßen Backunterlage besteht in der gegenüber herkömmlichen Backblechen erreichten Energieeffizienz bei gleichzeitiger Formstabilität. Dies wird dadurch erreicht, dass die Backunterlage anstelle ausschließlich eines Metallblechs aus einem Verbundmaterial gebildet ist. Dieses Verbundmaterial ist mehrschichtig ausgebildet und verfügt über eine erste Schicht aus einem Stahlwerkstoff und eine zweite Schicht, die als Trageinrichtung dient und aus einem Werkstoff gebildet ist, der eine gegenüber einem Stahlwerkstoff geringere Wärmeleitfähigkeit. Dabei sind der das Backblech bildende Stahlwerkstoff und die Trageinrichtung quasi einstückig ausgebildet, vorzugsweise durch Stoffschluss. Es wird so bei gleichzeitiger Formstabilität ein Verbundkörper bereitgestellt, der aufgrund der gewählten Werkstoffe eine im Vergleich zu herkömmlichen Backblechen geringere Wärmeleitfähigkeit aufweist, womit sich die mit der erfindungsgemäßen Ausgestaltung erzielte Energieeffizienz einstellt.

Die Trageinrichtung kann aus einem quasi beliebigen Werkstoff bestehen. Entscheidend ist, dass eine quasi einstückige Ausgestaltung mit dem Backblech zu einem Verbundkörper gestattet ist und es die Trageinrichtung aufgrund ihrer tragenden Funktion gestattet, die Dicke des Backblechs, das heißt die Menge an eingesetztem Stahlwerkstoff zu minimieren. Als Werkstoff eignen sich in diesem Sinne insbesondere keramische Werkstoffe, aber auch Kunststoffe, Metalle und/oder Kombinationen hieraus. Dabei ist es bevorzugt, die Trageinrichtung als einseitig ausgebildete Beschichtung des Backbleches auszubilden. Demnach trägt der Stahlwerkstoff des Backbleches einerseits eine als Trageinrichtung dienende Beschichtung und andererseits eine Korrosionsbeschichtung, beispielsweise eine feueraluminierte AlSi-Beschichtung, die ihrerseits wiederum mit einer Kunststoffbeschichtung ausgerüstet sein kann.

Als Trageinrichtung kommen auch faserverstärkte Ausbildungen in Betracht, beispielsweise faserverstärkte Keramikschichten.

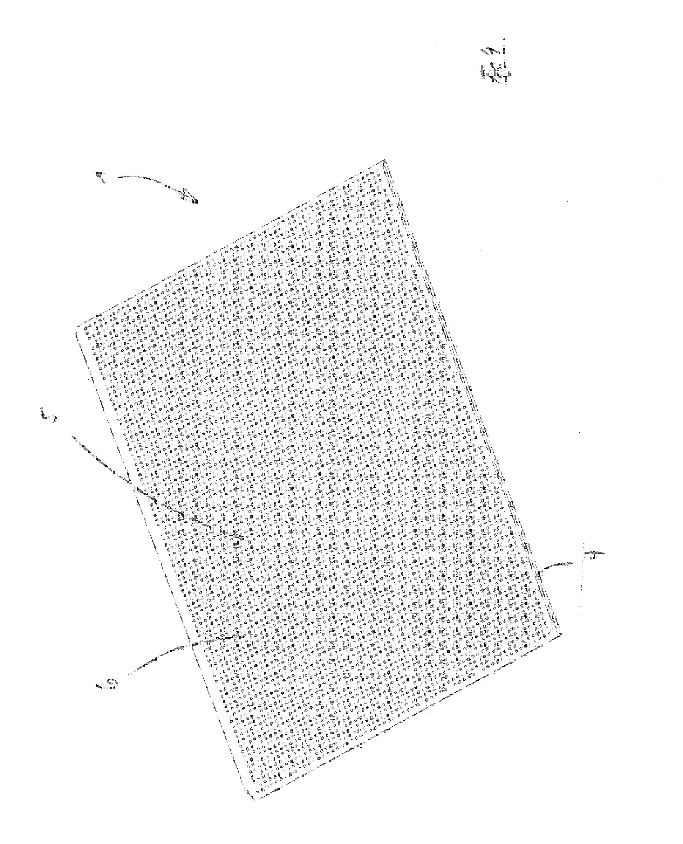

Die Figuren 4 bis 14 lassen in jeweils unterschiedlichen Ansichten Beispiele einer erfindungsgemäßen Backunterlage 1 erkennen.

Fig. 4 zeigt ein sogenanntes Lochblech. Gemäß dieser Ausgestaltung ist die von der Backunterlage 1 bereitgestellte Oberfläche 5 mit Durchgangsbohrungen bzw. -löchern ausgerüstet, die spalten- und reihenweise angeordnet sind.

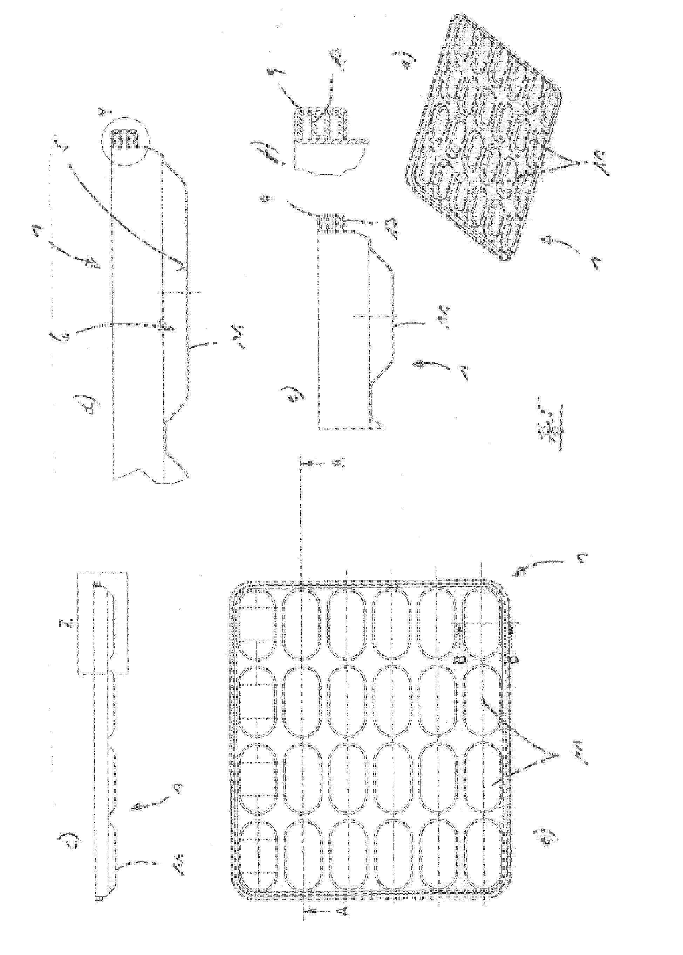

Fig. 5 lässt ein sog. Hamburger-Blech erkennen. Dieses stellt eine Vielzahl von Backmulden 11 bereit. Zum Zwecke der zusätzlichen Stabilisierung ist ein umlaufender Rand 9 vorgesehen, der mittels einer Einlage 13 ausgesteift ist. Bei dieser Einlage 13 kann es sich bevorzugterweise um ein Verbundmaterial im Sinne der Erfindung handeln.

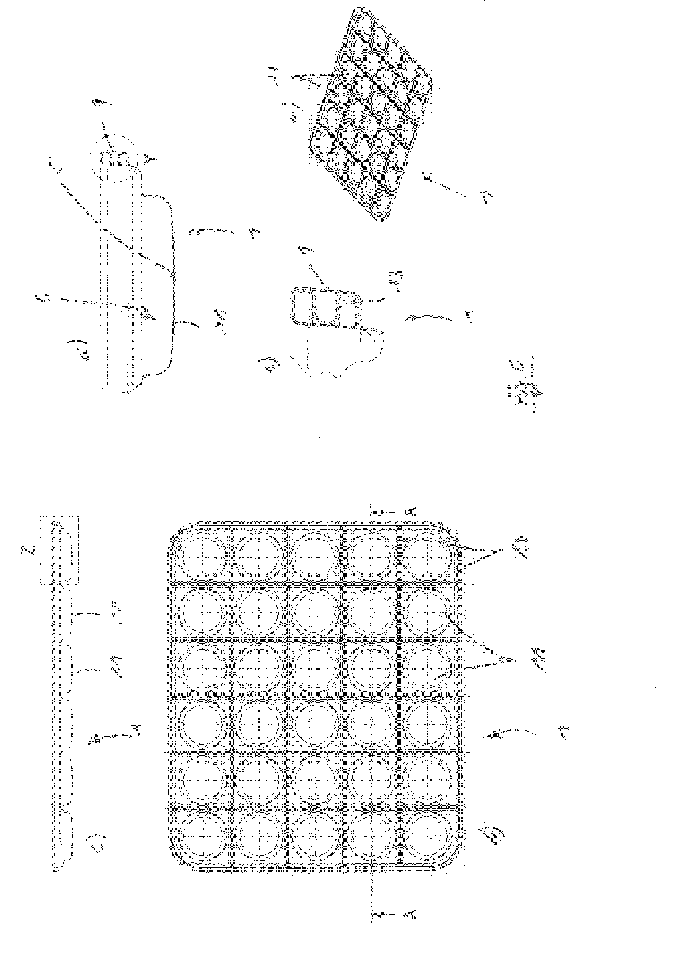

Fig. 6 zeigt eine weitere Ausführungsform, wobei die Besonderheit gemäß dieser Ausführungsform in einer zusätzlichen Verrippung 17 zu sehen ist. Diese Verrippung 17 dient der zusätzlichen Versteifung der Backunterlage 1.

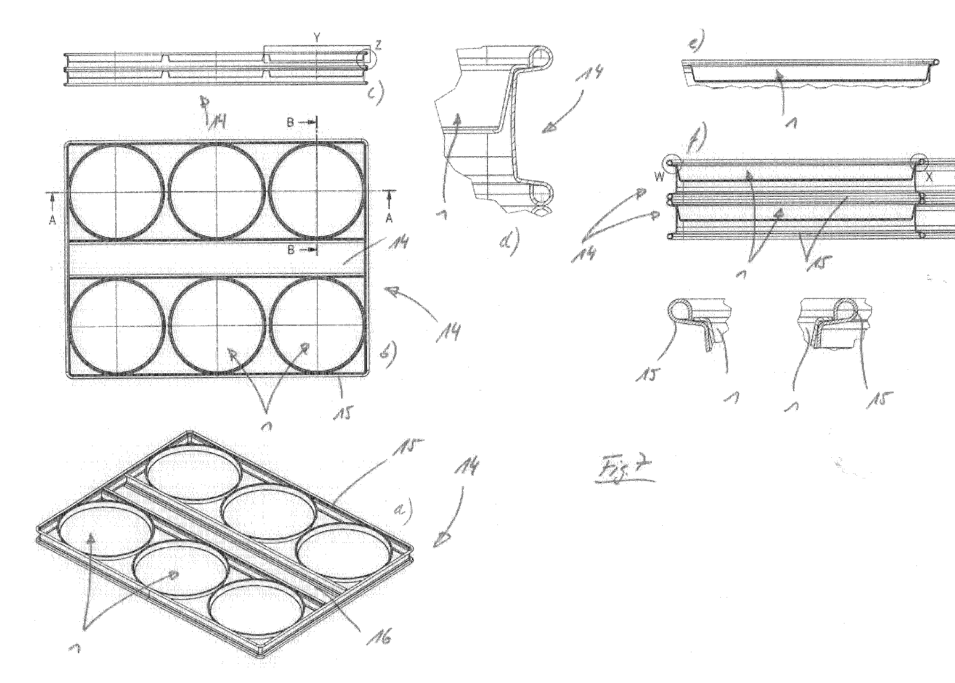

Fig. 7 zeigt einen Verband 14, der über eine Mehrzahl separater Backunterlagen 1 verfügt. Im gezeigten Ausführungsbeispiel sind die Backunterlagen 1 als Pizzableche ausgebildet. Im endmontierten Zustand werden die Pizzableche 1 von einer sie umgebenden Rahmeneinrichtung 15 gehalten. Es sind dabei zwei Reihen benachbarter Backunterlagen 1 vorgesehen, die über einen Mittelsteg voneinander getrennt sind. Wie insbesondere die Figuren 7c und 7f zeigen, lassen sich einzelne Verbände 14 übereinander stapeln.

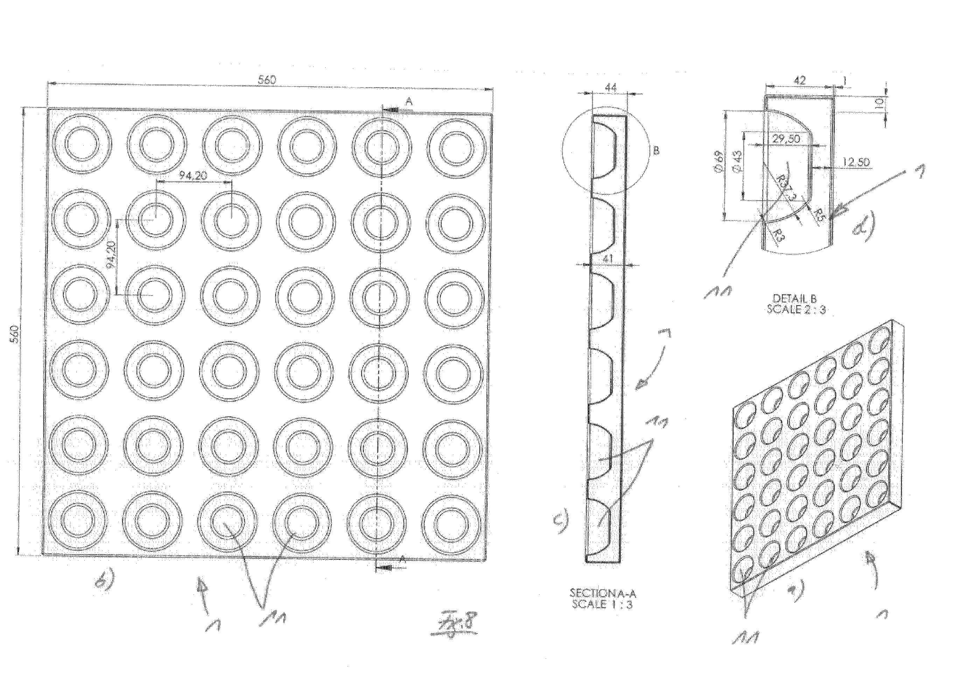

Fig. 8 lässt eine Backunterlage 1 für Muffins erkennen. Die Backunterlage stellt hierbei einzelne Backmulden 11 zur Verfügung.

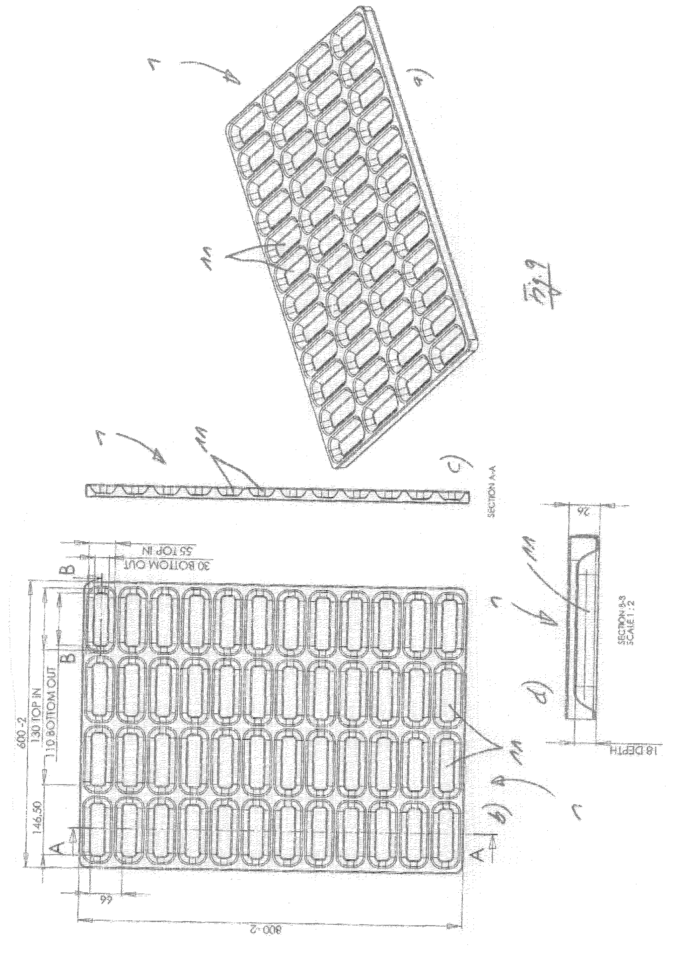

Ein sog. Hotdog-Blech zeigt Fig. 9. Auch hier stellt die Backunterlage 1 einzelne Backmulden 11 zur Verfügung.

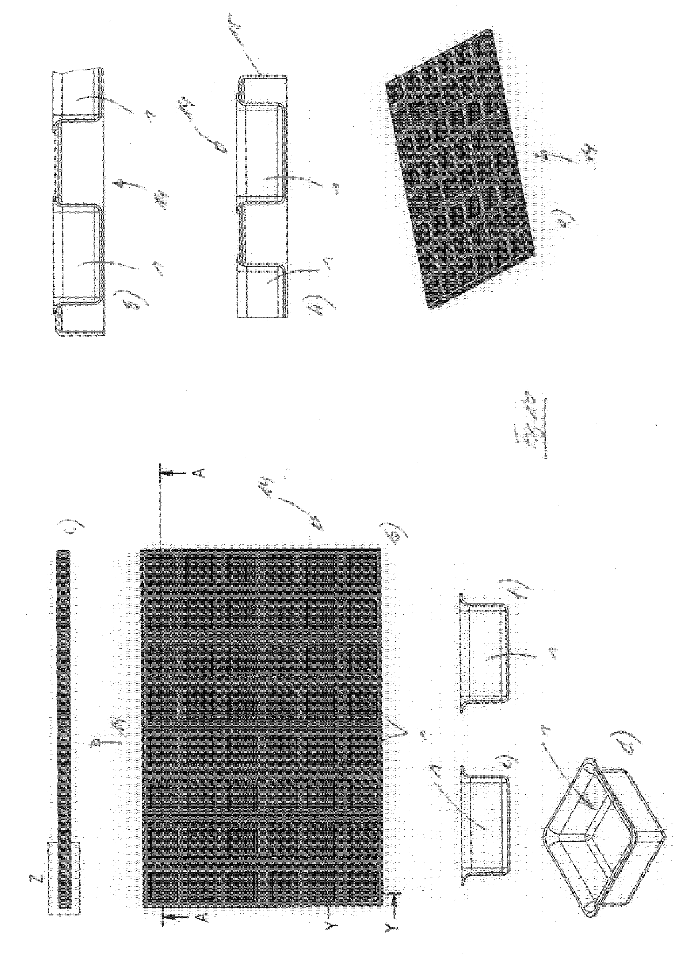

Fig. 10 zeigt ein sog. Kuchenblech. Dieses bildet einen Verband 14 aus, der einzelne Backunterlagen 1 miteinander kombiniert. Diese sind von einer Rahmeneinrichtung 15 aufgenommen, die beispielsweise über einzelne Aussparungen verfügt, in die jeweils eine Backunterlage 1 eingesetzt ist. Die Rahmeneinrichtung 15 ist bevorzugterweise aus einem Verbundmaterial nach der Erfindung gebildet.

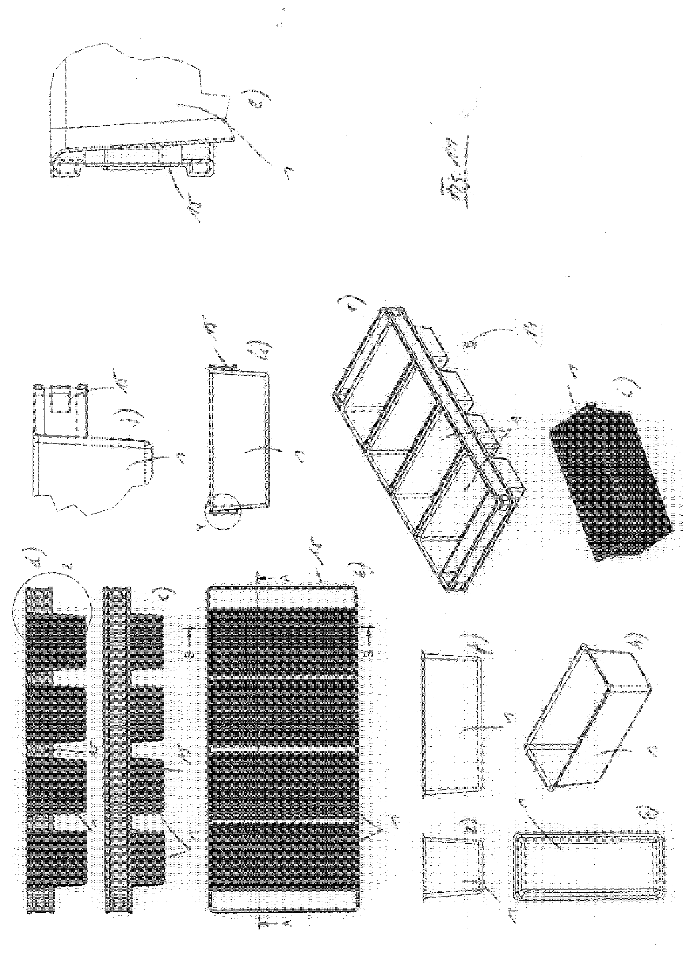

Einen weiteren Verband 14 zeigt Fig. 11. Bei dem hier dargestellten Verband 14 handelt es sich um einen sog. Kuchenverband. Dieser verfügt über einzelne Backunterlagen 1 in der Ausgestaltung als Kuchenform. Im endmontierten Zustand nimmt eine Rahmeneinrichtung 15 eine Mehrzahl von einzelnen Backunterlage 1 auf.

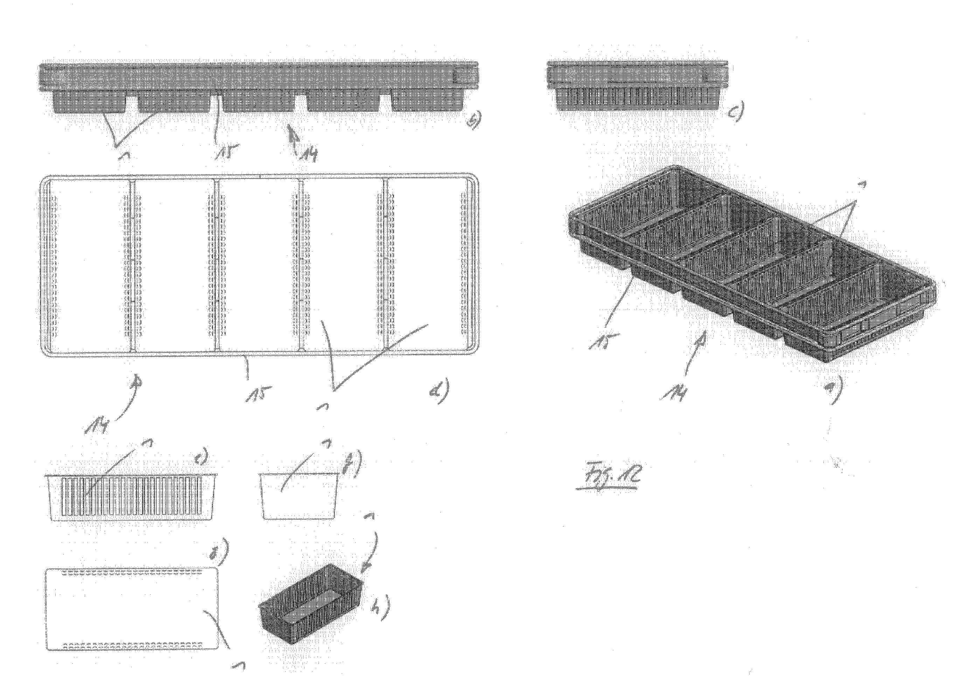

Fig. 12 zeigt eine zu Fig. 1 abgewandelte Ausführungsform, dergemäß die einzelnen Backunterlagen innenseitig Verrippungen aufweisen, die insbesondere der Musterbildung beim Backerzeugnis dienen.

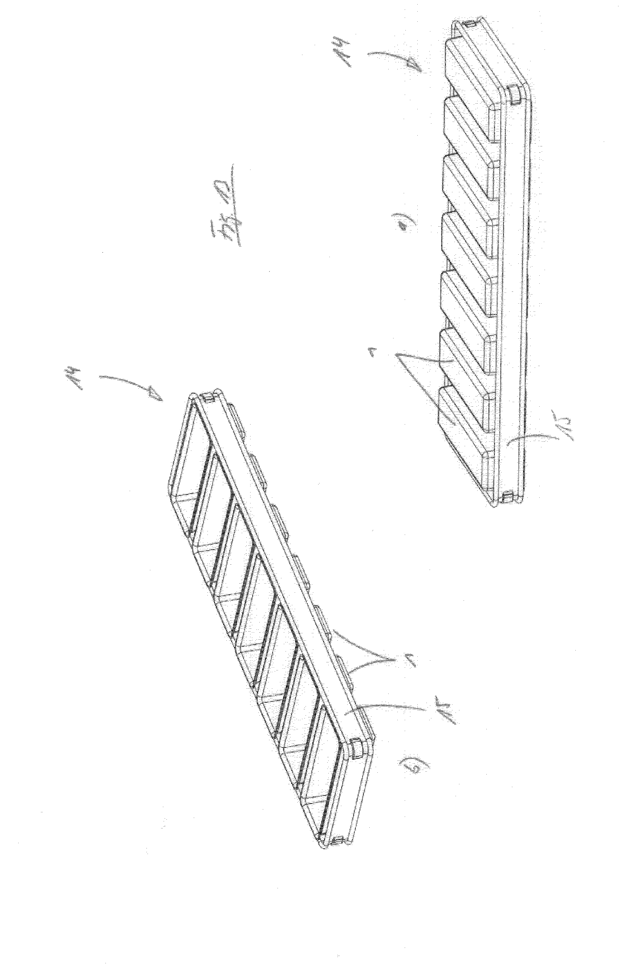

Fig. 13 zeigt einen weiteren Kuchenverband 14, demgemäß sieben Backunterlagen 1 je Verband 14 vorgesehen sind.

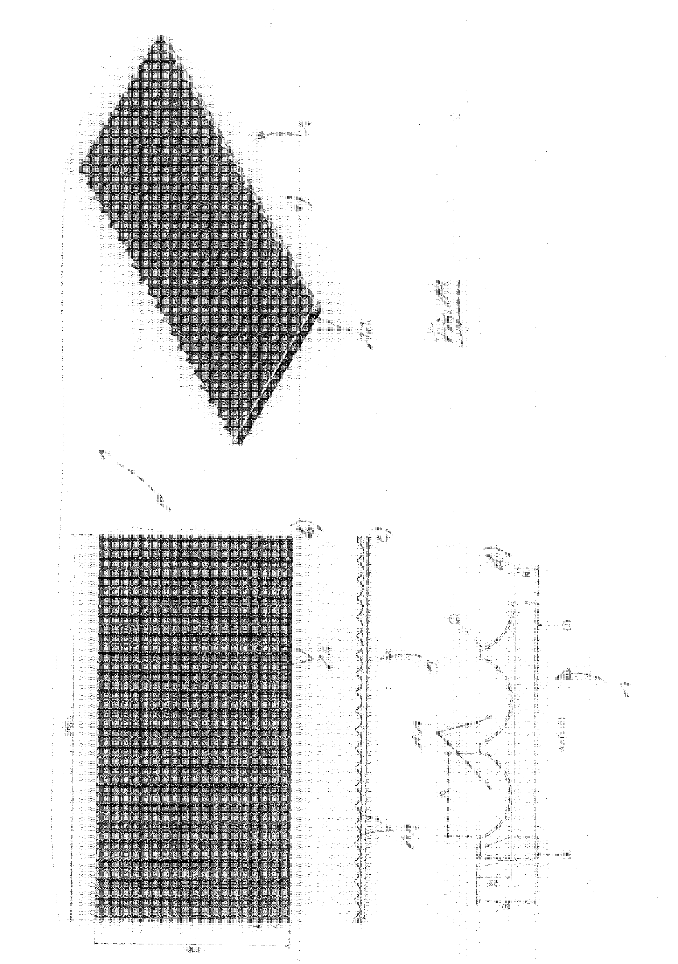

Fig. 14 zeigt schließlich eine Backunterlage 1, bei der es sich um ein sog. Baguetteblech handelt. Die Backunterlage 1 stellt mehrere Backmulden 11 bereit, die der jeweiligen Aufnahme eines Backerzeugnisses in Form eines Baguettes dienen.

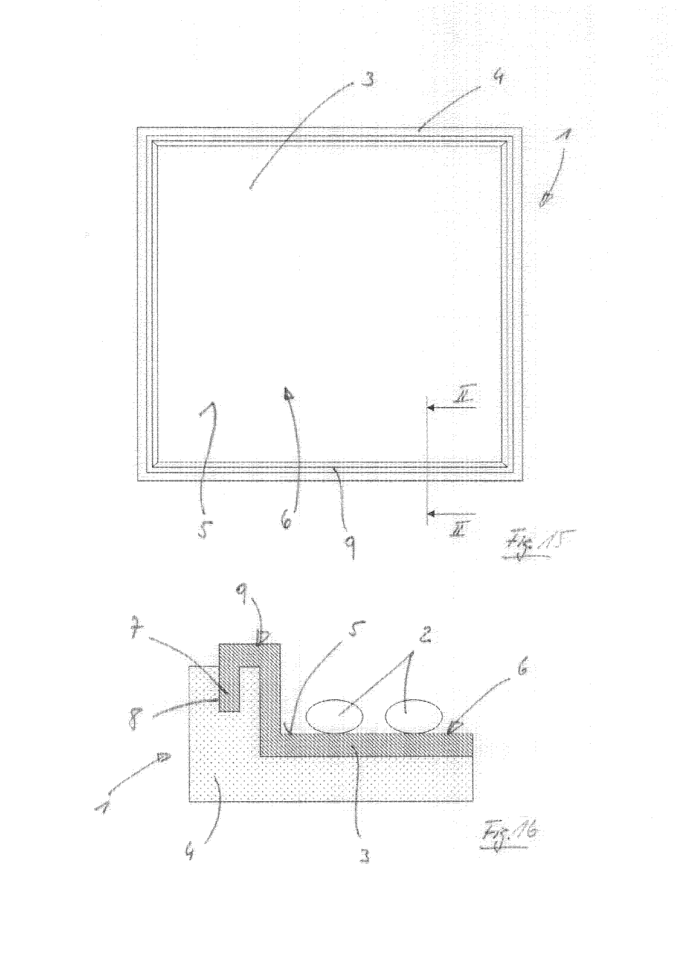

Fig. 15 lässt die erfindungsgemäße Backunterlage 1 in einer Alternative in schematischer Draufsicht von oben erkennen.

Die Backunterlage 1 verfügt über ein Backblech 3 einerseits und eine Trageinrichtung 4 andererseits. Das Backblech besteht aus einem feueraluminierten Stahlblech, beispielsweise mit einer AlSi-Beschichtung. Optional kann das Backblech noch mit einer Kunststoffbeschichtung, beispielsweise einer PTFE-Beschichtung (Teflon) ausgerüstet sein.

Die Trageinrichtung ist aus einem keramischen Werkstoff gebildet, beispielsweise einem Feuerleichtstein, insbesondere einem Schamottestein. Die Wärmeleitfähigkeit der Trageinrichtung ist damit wesentlich geringer als die Wärmeleitfähigkeit des Backblechs, was im bestimmungsgemäßen Verwendungsfall des Backvorgangs dazu führt, dass ein wesentlich geringerer Wärmeeintrag in die Trageinrichtung als in das Backblech stattfindet. Damit entzieht die erfindungsgemäße Backunterlage im Unterschied zu herkömmlichen Backblechen der Backofenatmosphäre weniger Wärmeenergie, ist mithin energieeffizienter.

Es ist erfindungsgemäß vorgesehen, dass die Backunterlage als einstückiger Verbundkörper ausgebildet ist, d. h. dass das Backblech 3 und die Trageinrichtung 4 zu einem einstückigen Verbundkörper miteinander verbunden sind. Diese Verbindung ist bevorzugterweise stoffschlüssig bzw. quasi stoffschlüssig ausgebildet, beispielsweise durch Kleben und/oder Schweißen.

Wie die Ausschnittsdarstellung nach Fig.16 erkennen lässt, ist das Backblech 3 mit einem umlaufenden Rand 9 ausgerüstet. Dieser Rand 9 stellt eine Randkante 7 bereit, die im montierten Zustand in eine entsprechende Aussparung 8 der Trageinrichtung 4 eingreift. Es ist so ein formschlüssiger und hygienisch rein zu haltender Übergang zwischen Backblech 3 einerseits und Trageinrichtung 4 andererseits sichergestellt.

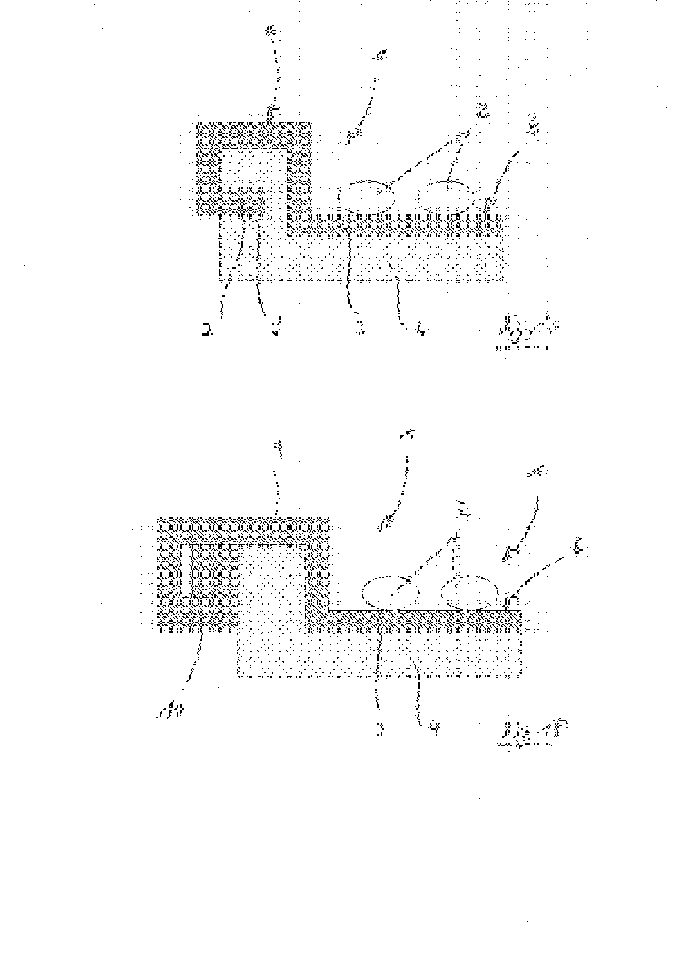

Fig. 17 lässt eine zur Ausgestaltung nach Fig. 16 alternative Ausführungsform erkennen, der gemäß der Rand 9 des Backblechs 3 über den Rand der Trageinrichtung 4 hinausragt und diesen vollständig mit abdeckt. Die Randkante 7 des Rands 9 greift gemäß dieser Ausführungsform in eine stirnseitig der Trageinrichtung 4 ausgebildete Aussparung 8 hinein.

Eine weitere alternative Ausführungsform zeigt Fig. 18. Gemäß dieser Ausführungsform ist der Rand 9 außenseitig mit einer zusätzlichen Umbördelung ausgerüstet, die einen Absatz 10 bereitstellt. Dieser Absatz 10 ist vorzugsweise umlaufend um die Trageinrichtung 4, in jedem Fall aber an zwei aneinander gegenüberliegenden Stirnseiten der Trageinrichtung 4 ausgebildet und dient insbesondere als Unter- oder Hintergreifungskante für roboter- bzw. automatengestützte Ofenbe- und Entstückungssysteme.

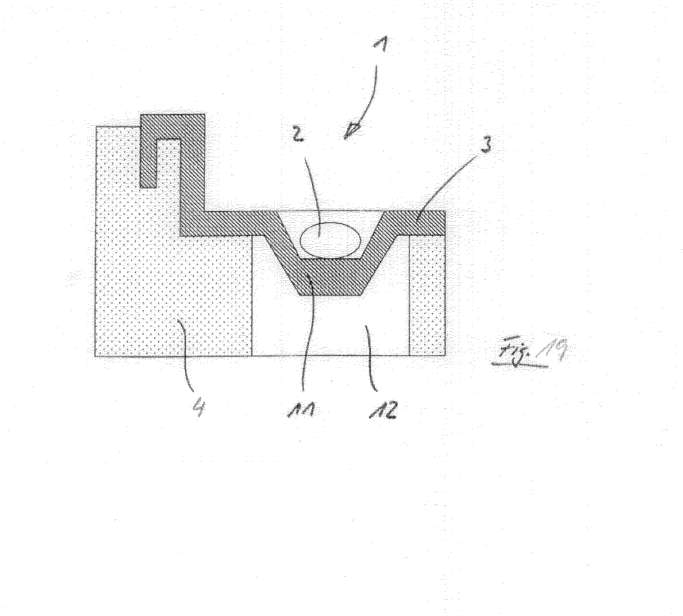

Eine weitere Ausführungsform zeigt Fig. 19. Gemäß dieser Ausführungsform ist die vom Backblech 3 bereitgestellte Aufnahme 6 nicht plan ausgebildet, sondern stellt Backmulden 11 bereit. Diese Backmulden 11, auch Cups genannt, dienen der Aufnahme jeweils eines Backerzeugnisses 2, beispielsweise eines Teiglings oder eines Auftauprodukts. Im montierten Zustand greift eine jede Backmulde 11 in eine korrespondierend ausgebildete Aussparung 12 der Trageinrichtung 4 ein. Dabei dient die Aussparung 12 einerseits der Aufnahme der Backmulde 11, stellt aber auch andererseits eine Be- bzw. Entlüftung für die der Trageinrichtung 4 zugewandte Unterseite des Backblechs 3 bereit, so dass ein verbesserter Wärmetransport bzw. Abführung zum Backblech 3 hin bzw. von diesem weg stattfinden kann.

**Bezugszeichenliste**

| | | | |
|---|---|---|---|
| 1 | Backunterlage | 15 | Rahmeneinrichtung |
| 2 | Backerzeugnis | 16 | Mittelsteg |
| 3 | Backblech | 17 | Verrippung |
| 3a | Stahlwerkstoff | | |
| 3b | AlSi-Beschichtung | | |
| 3c | PTFE-Beschichtung | | |
| 4 | Trageinrichtung | | |
| 5 | Oberseite | | |
| 6 | Aufnahme | | |
| 7 | Randkante | | |
| 8 | Aussparung | | |
| 9 | Rand | | |
| 10 | Absatz | | |
| 11 | Backmulde | | |
| 12 | Aussparung | | |
| 13 | Einlage | | |
| 14 | Verband | | |

## Patentansprüche

1. Backunterlage zur Anordnung von Backerzeugnissen, insbesondere Brot, Brötchen und/oder dergleichen in einem Ofen, mit einem Backblech (3) aus einem feueraluminierten Stahlblech und einer das Backblech (3) aufnehmenden Trageinrichtung (4) aus einem vorzugsweise keramischen Werkstoff, der eine geringere Wärmeleitfähigkeit als das Stahlblech des Backblechs (3) aufweist, wobei das Backblech (3) auf seiner der Trageinrichtung (4) abgewandten Oberseite (5) eine Aufnahme (6) für ein Backerzeugnis (2) bereitstellt, **dadurch gekennzeichnet, dass** das Backblech (3) und die Trageinrichtung (4) zu einem einstückigen Verbundkörper miteinander verbunden sind.

2. Backunterlage nach Anspruch 1, **dadurch gekennzeichnet, dass** das Backblech (3) mit der Trageinrichtung (4) verklebt und/oder verschweißt ist.

3. Backunterlage nach Anspruch 1, **dadurch gekennzeichnet, dass** die Trageinrichtung (4) als Beschichtung des Backblechs (3) ausgebildet.

4. Backunterlage nach Anspruch 1 oder 2, **dadurch gekennzeichnet, dass** das Backblech (3) und die Trageinrichtung (4) randseitig bündig abschließen.

5. Backunterlage nach Anspruch 1 oder 2, **dadurch gekennzeichnet, dass** das Backblech (3) die Trageinrichtung (4) randseitig umgreift.

6. Backunterlage nach einem der Ansprüche 1 oder 2, **dadurch gekennzeichnet, dass** das Backblech (3) mit seinen Randkanten (7) in hierzu korrespondierende Aussparungen (8) der Trageinrichtung (4) eingreift.

7. Backunterlage nach einem der vorhergehenden Ansprüche, **gekennzeichnet durch** eine Dicke in Dickenrichtung von 0,1 mm bis 0,8 mm, vorzugsweise von 0,2 mm bis 0,5 mm, noch mehr bevorzugt von 0,3 mm aufweist.

8. Backunterlage nach einem der vorhergehenden Ansprüche, **dadurch gekennzeichnet, dass** die vom Backblech (3) bereitgestellte Aufnahme (6) plan ausgebildet ist.

9. Backunterlage nach einem der vorhergehenden Ansprüche 1 bis 6, **dadurch gekennzeichnet, dass** die vom Backblech (3) bereitgestellte Aufnahme (6) eine Mehrzahl von vorzugsweise in Reihen und/oder Spalten angeordneten Backmulden (11) zur Aufnahme jeweils eines Backerzeugnisses (2) aufweist.

10. Backunterlage nach einem der vorhergehenden Ansprüche, **gekennzeichnet durch** eine tiefgezogene Ausgestaltung.

11. Backunterlage nach einem der vorhergehenden Ansprüche, **dadurch gekennzeichnet, dass** die Trageinrichtung (4) zu den Backmulden (11) des Backblechs (3) korrespondierende Aussparungen (12) aufweist.

12. Backunterlage nach einem der vorhergehenden Ansprüche, **dadurch gekennzeichnet, dass** die Trageinrichtung (4) mehrteilig ausgebildet ist.

13. Backunterlage nach einem der vorhergehenden Ansprüche, **gekennzeichnet durch** einen umlaufenden Absatz (10).

14. Backunterlage nach einem der vorhergehenden Ansprüche, **gekennzeichnet durch** eine Größenabmessung in der Breite von 10 mm bis 2400 mm und in der Länge von 10 mm bis 2400 mm.

15. Verwendung eines feueraluminierten Stahlblechs als Backblech (3), insbesondere eines Backblechs (3), das mit einer Trageinrichtung (4) aus einem vorzugsweise keramischen Werkstoff zu einem als Backunterlage (1) dienenden einstückigen Verbundkörper verbunden ist.
